# EUROPEAN PATENT SPECIFICATION

(11) **EP 3 277 765 B1**
(45) Date of publication and mention of the grant of the patent: **13.01.2021**
(21) Application number: 16718052.0
(22) Date of filing: 28.03.2016
(51) Int. Cl.: C09D 175/00

(54) **HARD SURFACE FLOOR COVERINGS WITH SUPERIOR STAIN RESISTANCE**
HARTFUSSBODENBELÄGE MIT HERVORRAGENDER FLECKENBESTÄNDIGKEIT
REVÊTEMENTS DE SOL À SURFACE DURE PRÉSENTANT UNE EXCELLENTE RÉSISTANCE AUX TACHES

(30) Priority: 03.04.2015 US 201562142611 P
(43) Date of publication of application: 07.02.2018
(73) Proprietor: Armstrong World Industries, Inc., Lancaster, PA 17604-3001 (US)
(72) Inventor: TIAN, Dong, Lancaster, Pennsylvania 17601 (US)
(74) Representative: Jenkins, Peter David
(86) International application number: PCT/US2016/024462
(87) International publication number: WO 2016/160673

(56) References cited:
- EP-A1- 1 045 009
- EP-A1- 1 382 625
- EP-A1- 1 544 258
- JP-A- 2001 011 376

## Description

### CROSS REFERENCE TO RELATED APPLICATION

This application is a PCT International Application of U.S. Provisional Application No. 62/142,611, filed on April 3, 2015. The disclosure of the above application is incorporated herein by reference.

### FIELD OF INVENTION

Embodiments of the present invention relate to a stain resistant coating for flooring tiles and panels, methods for preparing and applying the stain resistant coating, and flooring systems comprising the abrasion resistant coating.

### BACKGROUND

Heretofore, curable coating compositions have been used as overcoat materials to cover the surface of flooring products or various stain heavy surfaces to protect such a products or surfaces from tarnish by stain or dirt. Although there have been previous attempts at creating stain resistant coatings, there remains a need to provide a stain resistant flooring products that are not only dirt and stain resistant, but also have desirable attributes of conventional flooring products such as conventional maintenance attributes, e.g., ease of waxing and polishing.

EP 1544258 describes electrically conductive floor covering.

EP 1382625 describe primers for polymeric substrates.

JP 2001-011376 describes a surface functional material. EP 1045009 describes a heat-curable coating composition.

### SUMMARY

Some embodiments of the present invention are directed to a floor covering comprising a substrate and a coating layer. In some embodiments, the coating layer may be formed from a curable coating composition comprising a binder and a fluoro-polymer. The binder may include silicon acrylate in a first amount. The fluoro-polymer, which may also functions as a matting agent, is present in a second amount. A weight ratio of the first amount of the silicon acrylate to the second amount of fluoropolymer ranges from 1:2 to 2:1.

Some embodiments of the present invention are directed to a multi-layer floor covering comprising a substrate, a base coat layer, and a top coat layer. The top coat layer is formed from a curable coating composition comprising a binder and a fluoropolymer. The coating composition includes silicon acrylate in a first amount, and a fluoropolymer in a second amount. A weight ratio of the first amount of the silicon acrylate to the second amount of fluoropolymer ranges from 1:2 to 2:1.

Some embodiments of the present invention are directed to a method of forming a floor covering. The method includes providing a curable binder composition comprising a silicon acrylate in a first amount. Subsequently, the method further includes adding a fluoropolymer to the curable binder composition to form a curable coating composition. Subsequently, the method comprises applying the curable coating composition to a substrate, followed by exposing the curable coating composition to a first radiation for a first period of time. The method further comprises exposing the curable coating composition to a second radiation for a second period of time subsequent to the first radiation. The first period of time and the second period of time do not overlap, and wherein a weight ratio of the first amount of the silicone acrylate to the second amount of the fluoropolymer ranges from 2:1 to 1:2.

### DETAILED DESCRIPTION

The present invention is directed to floor coverings comprising a substrate and a stain resistant coating layer. The coating layer is formed from a binder and a fluoropolymer, which may also function as a matting agent. According to some embodiments, the binder may comprise a blend of acrylate-functional compounds.

According to some embodiments of the present invention, the binder may comprise resin selected from acrylate-functional polymer, acrylate-functional oligomer, acrylate-functional monomer, and combinations thereof. The acrylate-functional polymer may include polyester acrylate, polyurethane acrylate, polyether acrylate, polysiloxane acrylate, and polyolefin acrylate.

In some embodiments, the polyester acrylate according to the present invention may be a linear or branched polymer having at least one acrylate or (meth)acrylate functional group. In some embodiments, the polyester acrylate of the present invention has at least 1 to 10 free acrylate groups, (meth) acrylate groups, or a combination thereof.

In some embodiments, the polyester acrylate has an acrylate functionality. The polyester acrylate may be the reaction product of polyester polyol and an carboxylic acid functional acrylate compound such as acrylic acid, (meth)acrylic acid, or a combination thereof at a OH:COOH ratio of about 1:1. The polyester polyol may be a polyester diol having two hydroxyl groups present at terminal end of the polyester chain. In some embodiments, the polyester polyol may have a hydroxyl functionality ranging from 3 to 9, wherein the free hydroxyl groups are present at the terminal ends of the polyester chain or along the backbone of the polyester chain.

In non-limiting embodiments, the polyester polyol may be the reaction product of a hydroxyl-functional compound and a carboxylic acid functional compound. The hydroxyl-functional compound is present in a stoichiometric excess to the carboxylic-acid compound. In some embodiments the hydroxyl-functional compound is a polyol, such a diol or a tri-functional or higher polyol (e.g. triol, tetrol, etc.). In some embodiments the polyol may be aromatic, cycloaliphatic, aliphatic, or a combination thereof. In some embodiments the carboxylic acid-functional compound is dicarboxylic acid, a polycarboxylic acid, or a combination thereof. In some embodiments, the dicarboxylic acid and polycarboxylic acid may be aliphatic, cycloaliphatic, aromatic, or a combination thereof.

In some embodiments the diol may be selected from alkylene glycols, such as ethylene glycol, propylene glycol, di ethylene glycol, dipropylene glycol, triethylene glycol, tripropylene glycol, hexylene glycol, polyethylene glycol, polypropylene glycol and neopentyl glycol; hydrogenated bisphenol A; cyclohexanediol; propanediols including 1,2-propanediol, 1,3-propanediol, butyl ethyl propanediol, 2- methyl- 1,3-propanediol, and 2-ethyl-2-butyl- 1,3-propanediol; butanediols including 1,4-butanediol, 1,3-butanediol, and 2-ethyl-1,4-butanediol; pentanediols including trimethyl pentanediol and 2-methylpentanediol; cyclohexanedimethanol; hexanediols including 1,6-hexanediol; caprolactonediol (for example, the reaction product of epsilon-caprolactone and ethylene glycol); hydroxy-alkylated bisphenols; polyether glycols, for example, poly(oxytetramethylene) glycol. In some embodiments, the tri-functional or higher polyol may be selected from trimethylol propane, pentaerythritol, di-pentaerythritol, trimethylol ethane, trimethylol butane, dimethylol cyclohexane, glycerol and the like.

In some embodiments the dicarboxylic acid may be selected from adipic acid, azelaic acid, sebacic acid, succinic acid, glutaiic acid, decanoic diacid, dodecanoic diacid, phthalic acid, isophthalic acid, 5-tert-butylisophthalic acid, tetrahydrophthalic acid, terephthalic acid, hexahydrophthalic acid, methylhexahydrophthalic acid, dimethyl terephthalate, 2,5-furandicarboxylic acid, 2,3-furandicarboxylic acid, 2,4-furandicarboxylic acid, 3,4-furandicarboxylic acid, 2,3,5-furantricarboxylic acid, 2,3,4,5-furantetracarboxylic acid, cyclohexane dicarboxylic acid, chlorendic anhydride, 1,3-cyclohexane dicarboxylic acid, 1,4-cyclohexane dicarboxylic acid, and anhydrides thereof, and mixtures thereof. In some embodiments the polycarboxylic acid may be selected from trimellitic acid and anhydrides thereof.

In some embodiments, the acrylate-functional polyurethane according to the present invention may be a linear or branched polymer having at least one functional group selected from an acrylate group or a (meth) acrylate group. In some embodiments, the acrylate-functional polyurethane may has at least 2 to 9 functional groups selected from an acrylate group, a (meth)acrylate group, or a combination thereof. In some embodiments, the acrylate-functional polyurethane has between 2 and 4 functional groups selected from an acrylate group, (meth)acrylate group, or a combination thereof.

In some embodiments, the acrylate functional polyurethane may be the reaction product of a high molecular weight polyol and diisocyanate, polyisocyanate, or a combination thereof. The high molecular weight polyol may be selected from polyester polyol, polyether polyol, polyolefin polyol, and a combination thereof - the high molecular weight polyol having a hydroxyl functionality ranging from 3 to 9.

In some embodiments, the polyester polyol used to create the acrylate-functional polyurethane is the same as used to create the acrylate functional polyester. In some embodiments, the polyether polyol may be selected from polyethylene oxide, polypropylene oxide, polytetrahydrofuran, and mixtures and copolymers thereof.

The high molecular weight polyol may be reacted with polyisocyanate, such as a diisocyanate, a tri-functional isocyanate (e.g. isocyanurate), higher functional polyisocyanates, or a combination thereof in an NCO:OH ratio ranging from about 2:1 to 4:1. The polyisocyanate may be selected from isophorone diisocyanate, 4,4'-dicyclohexylmethane-diisocyanate, and trimethylhexamethylene-diisocyanate, 1,6 hexamethylene diisocyanate, 2,2,4- trimethylhexamethylene diisocyanate, octadecylene diisocyanate and 1,4 cyclohexylene diisocyanate. toluene diisocyanate; methylenediphenyl diisocyanate; tetra methylxylene diisocyanate, and isocyanurates, biurets, allophanales thereof, as well as mixtures thereof. The resulting reaction product is an isocyanate-terminated prepolymer.

The isocyanate-terminated prepolymer is then reacted with hydroxyl-functional acrylate compound in an NCO:OH ratio of about 1: 1 to yield an acrylate or (meth)acrylate functional polyurethane. The hydroxyl-functional acrylate compounds may include hydroxyethyl acrylate, hydroxyethyl methacrylate, hydroxypropyl acrylate, hydroxypropyl methacrylate, hydroxybutyl acrylate, hydroxybutyl methacrylate, hydroxypentyl acrylate, hydroxypentyl methacrylate, hydroxyhexyi acrylate, hydroxyhexyl methacrylate, aminoethyl acrylate, and aminoethyl methacrylate, and a combination thereof,

According to some embodiments of the present invention, the binder may comprise acrylate-functional oligomers that include mono-functional oligomers, di-functional oligomers, tri-functional oligomers, tetra-functional oligomers, penta-functional oligomers, and combinations thereof.

In some non-limiting embodiments the mono-functional oligomers may be selected from alkoxylated tetrahydrofurfuryl acrylate; alkoxylated tetrahydrofurfuryl methylacrylate; alkoxylated tetrahydrofurfuryl ethylacrylate; alkoxylated phenol acrylate; alkoxylated phenol methylacrylate; alkoxylated phenol ethylacrylate; alkoxylated nonylphenol acrylate; alkoxylated nonylphenol methylacrylate; alkoxylated nonylphenol ethylacrylate, and mixtures thereof. The alkoxylation may be performed using ethylene oxide, propylene oxide, butylene oxide, or mixtures thereof. In some embodiments the degree of alkoxylation ranges from about 2 to 10. In some embodiments, the degree of alkoxylation ranges from about 4 to 6.

In some non-limiting embodiments the di-functional oligomers may be selected from ethylene glycol diacrylate, propylene glycol diacrylate, diethylene glycol diacrylate, dipropylene glycol diacrylate, triethylene glycol diacrylate, dipropylene glycol diacrylate, polyethylene glycol diacrylate, polypropylene glycol diacrylate, ethoxylated bisplienol A diacrylate, bisplienol A diglycidyl ether diacrylate, resorcinol diglycidyl ether diacrylate, 1 ,3-propanediol diacrylate, 1,4-butanediol diacrylate, 1,5-pentanediol diacrylate, 1,6-hexanediol diacrylate, neopentyl glycol diacrylate, cyclohexane dimethanol diacrylate, ethoxylated neopentyl glycol diacrylate, propoxylated neopentyl glycol diacrylate, ethoxylated cyclohexanedimethanol diacrylate, propoxylated cyclohexanedimethanol diacrylate, and mixtures thereof.

In some non-limiting embodiments, the tri-functional oligomers may be selected from trimethylol propane diacrylate, isocyanurate diacrylate, glycerol diacrylate, ethoxylated trimethylolpropane diacrylate, propoxylated trimethylolpropane triacrylate, tris (2-hydroxyethyl) isocyanurate triacrylate, ethoxylated glycerol triacrylate, propoxylated glycerol triacrylate. pentaerythritol triacrylate, mel amine triacrylates, and mixtures thereof.

In some non-limiting embodiments, the acrylate-functional monomer may be selected from acrylic acid, methacrylic acid, ethyl acrylic acid, 2-phenoxyethyl acrylate; 2-phenoxyethyl methylacrylate; 2-phenoxyethyl ethylacrylate; tridecryl acrylate; tridecryl methylacrylate; tridecryl ethylacrylate; and mixtures thereof.

Some embodiments of the present invention may further include acrylate functional monomers selected from alkyl acrylates having up to about 12 carbon atoms in the alkyl segment such as ethyl acrylate, butyl acrylate, 2-ethylhexyl acrylate, amyl acrylate, n-lauryl acrylate, nonyl acrylate, n-octyl acrylate, isooctyl acrylate, isodecyl acrylate, etc.; alkoxyalkyl acrylates such as methoxybutyl acrylate, ethoxyethyl acrylate, ethoxypropyl acrylate, etc.; hydroxyalkyl acrylates such as hydroxyethyl acrylate, hydroxybutyl acrylate, etc.; alkenyl acrylates such as trimethoxyallyloxymethyl acrylate, allyl acrylate, etc.; aralkyl acrylates such as phenoxyethyl acrylate, benzyl acrylate, etc.; cycloalkyl acrylates such as cyclohexyl acrylate, cyclopentyl acrylate, isobornyl acrylate, etc.; aminoalkyl acrylates such as diethylaminoethyl acrylate; cyanoalkyl acrylates such as cyanoethyl acrylate, cyanopropyl acrylate, etc.; carbamoyloxy alkyl acrylates such as 2-carbamoyloxyethyl acrylate, 2-carbamoyl-oxypropyl acrylate, N-methylcarbamoyloxyethyl acrylate, N-ethylcarbamoyloxymethyl acrylate, 2-(N-methylcarbamoyloxy)-ethyl acrylate, 2-(N-ethylcarbamoyloxy)ethyl acrylate, etc.; and the corresponding methacrylates. In some embodiments, the alkyl acrylates having up to about 12 carbon atoms in the alkyl segment may be used as a reactive solvent / diluent in the abrasions resistant coating layer.

The acrylate-functional monomers may include the binder may comprise resin selected from acrylate-functional polymer, acrylate-functional oligomer, acrylate-functional monomer, or a combination thereof.

In some non-limiting embodiments, the acrylate-functional monomer may be selected from acrylic acid, methacrylic acid, ethyl acrylic acid, 2-phenoxyethyl acrylate; 2-phenoxyethyl methylacrylate; 2-phenoxyethyl ethylacrylate; tridecryl acrylate; tridecryl methylacrylate; tridecryl ethylacrylate; and mixtures thereof.

In some embodiments, the acrylate-functional monomer or oligomer is a silicone acrylate. Curable silicone acrylates are known and suitable silicone acrylates are disclosed, for example in U.S. Pat. 4,528,081 and U.S. Pat. 4,348,454. Suitable silicone acrylates include silicone acrylates having mono-, di-, and tri-acrylate moieties. Suitable silicone acrylates include, for example, Silcolease® UV RCA 170 and UV Poly 110, available from Blue Star Co. Ltd, China; and Silmer ACR D2, Silmer ACR Di-10, Silmer ACR Di-50 and Silmer ACR Di-100, available from Siltech. In some embodiments, the silicone acrylate may be present in an amount ranging from about 1 wt. % to 6 wt. % based on the total weight of the coating layer. In some embodiments, the silicone acrylate may be present in an amount ranging from about 1 wt. % to 5 wt. % based on the total weight of the coating layer. In some embodiments, the silicone acrylate may be present in an amount ranging from about 1 wt. % to 3.5 wt. % based on the total weight of the coating layer.

The coating layer may further comprise photoinitiator to facilitate UV curing of the curable coating composition. In some non-limiting embodiments, the photoinitiators may include a benzoin compound, an acetophenone compound, an acylphosphine oxide compound, a titanocene compound, a thioxanthone compound or a peroxide compound, or a photosensitizer such as an amine or a quinone. Specific examples photoinitiatiors include 1-hydroxycyclohexyl phenyl ketone, benzoin, benzoin methyl ether, benzoin ethyl ether, benzoin isopropyl ether, benzyl diphenyl sulfide, tetramethylthiuram monosulfide, azobisisobutyronitrile, dibenzyl, diacetyl and beta-chloroanthraquinone. In some embodiments, the photoinitators are water soluble alkylphenone photoinitiators.

The coating layer may further comprise an amine synergist. In some embodiments, the amine synergist may include diethylaminoethyle methacrylate, dimethylaminoethyl methacrylate, N-N-bis(2-hydroxyethyl)-P-toluidine, Ethyl-4-dimethylamino benzoate, 2- Ethylhexyl 4-dimethylamino benzoate, as well as commercially available amine synergist, including Sartomer CN 371, CN373, CN383, CN384 and CN386; Allnex Ebecry P104 and Ebecry PI 15. The amine synergist may be present in the radiation curable coating composition by an amount ranging from about 1 wt.% to about 5 wt.%, preferably about 3 wt.%.

In some embodiments, the coating layer may further comprise other additives and fillers, such as abrasives, surfactant, as pigments, tackifiers, matting agents, surfactant, fillers such as glass or polymeric bubbles or beads (which may be expanded or unexpanded), hydrophobic or hydrophilic silica, calcium carbonate, glass or synthetic fibers, blowing agents, toughening agents, reinforcing agents, fire retardants, antioxidants, and stabilizers. The additives are added in amounts sufficient to obtain the desired end properties. Suitable surfactants of the present invention include, but are not limited to, fluorinated alkyl esters, polyether modified polydimethylsiloxanes and fluoro surfactants, having the formula RfH2CH20(CH2CH20)xH, wherein R_{f}=F(CF₂CF₂)_{y}, x=0 to about 15, and y=1 to about 7. The surfactant may be present in the radiation curable adhesive composition by an amount ranging from about 0.5 wt.% to about 2 wt.%, preferably about 0.8 wt.%.

In some embodiments, the matting agent may comprise polyamide powder, fluoropolymer, silica, and combinations thereof. In some non-limiting embodiments, the polyamide powder may have a melting point up to 142°C and a particle size ranging from about 8 µm to 12 µm; preferably 10 µm. The polyamide powder may be polyamide-6,6, polyamide - 6,9; polyamide-6,10; polyamide-6,12; and polyamide- 12;6/ 12 - preferably polyamide-6,12. In some embodiments the polyamide powder may be present in amount ranging from 5 wt. % to 10 wt. % based on the total weight of the coating layer - preferably about 6 wt. % to 8 wt. %

In some embodiments, the fluoropolymer, which may also function as a matting agent, is selected from fluoropolymer particles or powders, which are also referred to as fluoropolymer waxes, and mixtures of fluoropolymer waxes and polyolefin waxes, and mixtures thereof. Suitable fluoropolymer waxes may have an average particle size ranging from about 0.5 µm to 30 µm, preferably from about 1 µm to 15 µm. In some embodiments, the fluoropolymer wax has an average particle size of 2-4 microns. In some embodiments, the fluoropolymer wax has an average particle size of 13-21-4 microns. In some embodiments, the fluoropolymer wax has an average particle size of 4-6 microns. In some embodiments, the fluoropolymer wax has an average particle size of 10-12 microns. In some embodiments, the fluoropolymer wax has an average particle size of 3.5-5.5 microns. In some embodiments, the fluoropolymer wax may comprise a mixture of different sized particles.

The fluoropolymer waxes may be selected from polytetrafluoroethylene (PTFE), florinated ethylene propylene (FEP), perfluoroalkoxy polymer resin (PFA), ethylene tetrafluoroethylene (ETFE), ethylene chloro trifluoroethylene (ECTFE), polychlorotrifluoroethylene (PCTFE), polyvinylidene fluoride (PVDF), and combinations thereof. In some embodiments, the fluoropolymer is PTFE. Suitable polyolefin waxes include polyethylene waxes and polypropylene waxes. Suitable fluoropolymer mixtures may include between 10 and 90 weight % of a fluoropolymer wax and between 10 and 90 weight % of a polyolefin wax. In some embodiments, the fluoropolymer mixture has between 20 and 30 weight % of a fluoropolymer wax and between 70 and 80 weight % of a polyolefin wax. In some embodiments, the fluoropolymer may be present in an amount ranging from about 1 wt. % to 5 wt. % based on the total weight of the coating layer. In some embodiments, the fluoropolymer may be present in an amount ranging from about 1 wt. % to 3.5 wt. % based on the total weight of the coating layer.

In some embodiments, the combination of amounts for each the silicon acrylate and the fluoropolymer sum to an amount ranging from about 1 wt. % to about 5 wt. % based on the total weight of the coating layer - the silicon acrylate being present relative to the fluoropolymer in a weight ratio ranging from about 2:1 to 1:2 - alternatively about 1:1.

In some embodiments, the silica may have a particle size at d50 (50% distribution) ranging from about 3 µm to 7 µm - preferably about 5 µm. In some embodiments the silica may be present in amount ranging from 1 wt. % to 3 wt. % based on the total weight of the coating layer - preferably about 2 wt. % to 2.5 wt. %.

In some non-limiting embodiments, the coating layer may be produced according to the following master batch methodology. The components making up the binder are first combined and mixed together at room temperature with high speed agitation. For the purposes of the present application the term high speed agitation means agitation with a blade at rotation speeds of at least 2,000 RPM. A dispersing agent may be added concurrently with the binder components or after the binder components have been blended together. The dispersing agents may be selected from acrylic block-copolymers, such as commercially available BYK Disperbyk 2008, Disperbyk 2155, Disperbyk 145 and Disperbyk 185, Lubrizol Solsperse 41000 and Solsperse 71000, and may be present in the coating layer by an amount ranging from 0.1 wt. % to 1 wt. %.

Next, the photoinitiator is slowly added at room temperature. In some alternative embodiments, the photoinitiator may be added at 45°C with high speed agitation. Once the photoinitiator is entirely dissolved into the master batch mixture, matting agents and the abrasion resistant particles may be added. The matting agent and, if desired, fillers/abrasives are added to the master batch as the final ingredients. The matting agent should be added slowly to avoid a powder layer from forming and floating on top of blend. Once added, the binder, dispersing agent, photoinitiator, and matting agent are mixed with high speed agitation for a period ranging from about 5 to about 15 minutes, preferably about 10 minutes. During the agitations, the blade may be moved up and down to ensure proper mixing of the ingredients in the master batch. The temperature of the master batch may increase during agitation, therefore to prevent premature thermal curing of the binder, the master batch may be cooled during agitation.

The resulting blend is a curable coating composition and may have a viscosity ranging from about 600 to about 1300 cPs at room temperature (74 °F) as measured by a Brookfield Viscometer using spindle #6 at 100 RPM. In some embodiments of the present invention, the viscosity allows the blend to be applied to a substrate by roll coating at room temperature. The substrates may selected from linoleum tile, ceramic tile, natural wood planks, engineered wood planks, vinyl tile - such as luxury vinyl tile ("LVT"), and resilient sheet - such as homogeneous or heterogeneous commercial resilient sheets and residential resilient sheets. After applying the blend to the substrate, the blend is exposed to UV radiation in air or a nitrogen environment.

The UV radiation includes UVA, UVB, UVC, and UVV sources. In some embodiments, the coating layer may be cured in a single or two-stage curing process. Non-limiting examples of UV partial cure radiation include UVA radiation of 0.189 J/cm²; UVB radiation of 0.163 J/cm²; UVC radiation of 0.01 J/cm²; and UVV radiation may be 0.092 J/cm². The pre-cure temperature may be 30°C - 40°C and the coating composition may be exposed to the UV radiation at a line speed ranging from about 25 to 75 FPM. Non-limiting examples of UV full cure include UVA radiation of 1.006 J/cm²; UVB radiation of 0.886 J/cm²; UVC radiation of 0.126 J/cm²; and UVV radiation may be 0.504 J/cm². To fully cure, the coating composition may be exposed to the UV radiation at a line speed ranging from about 25 to 75 FPM. The delay between the pre-cure / partial cure and the full cure ranges from about 3 seconds to about 10 seconds. The fully cured coating layer on the substrate forms the floor covering.

The floor covering of the present invention may consist of a single layer of the coating layer on a substrate. In other embodiments, the floor coating of the present invention may be a multi-layer floor covering. The multi-layer floor covering may be produced by first applying a first layer of the curable coating composition on a substrate by any suitable coating method, including roll coating. The first layer may then be partially or fully cured with, for example, UV radiation - forming a base coat. In other embodiments, the base coat may be a pre-existing base coat. Subsequently, a second layer of the coating composition may be applied to the top surface of the first layer by, for example, roll coating, thereby forming a multilayer coated surface. According to some embodiments, the second layer may then be partially or fully cured with UV radiation. One or more of additional coating layers may be applied on the second layer. Once the multilayer coated surface is formed, the multilayer coated surface can be fully cured, if any of the previously applied layers is only partially cured. The term partial curing as used herein refers to curing a coated layer to a nonfluid state (i.e., semi-solid or solid) that may be tacky to the touch.

In some embodiments, each fully cured coating layer may have an average coating thickness that ranges from about 2 µm to about 50 µm. In some embodiments, the fully cured coating layer may have an average coating thickness that ranges from about 4 µm to about 40 µm. In some embodiments, the fully cured coating layer may have an average coating thickness that ranges from about 6 µm to about 20 µm.

The present invention has been disclosed in conjunction with UV curable coating compositions for illustration purposes only, and other curable coating compositions, such as moisture curable urethane coating compositions, 2K urethane coating compositions, epoxy coating compositions and acrylic coating compositions, can be utilized.

The following examples were prepared in accordance with the present invention. The present invention is not limited to the examples described herein.

### EXAMPLES

A variety of coating layers were created and tested. The coating layer of Example 1 was produced according to the following procedure. Example 1 was prepared by first mixing together the following ingredients:
i. 17.5 grams of Eternal EC6360 - polyester acrylate;
ii. 32.5 grams of Allnex, EB8602 - urethane acrylate;
iii. 20 grams of tricyclodecane dimethanol diacrylate;
iv. 7 grams of trimethylolpropane triacrylate;
v. 10 grams of isobornyl acrylate;
vi. 9 grams of 2-phenoxythyl acrylate; and
vii. 9 grams of hexanediol diacrylate
viii. 2 grams of silicon acrylate - i.e. BlueStar Silicon, Scla UV RCA 170.

Next 4.46 grams of amine synergist (Sartomer CN 371) and 5.8 grams of photoinitiator were added with high speed agitation until completely dissolved in the mixture. The photoinitiator included 4.64 grams of diphenyl ketone and 1.16 grams of 1-hydroxy-cyclohexyl phenyl ketone. Next, 5.4 grams of matting agent was added. The matting agent includes the following:
i. 2.39 grams of Arkema, Orgasol 3501 EX D NAT1 - a polyamide 6/12; ii. 3.01 grams of MicroPowder Fluo HT having a particle size ranging from 2 µm to 4 µm.

The matting agent was added slowly, the mixture is agitated for at least 10 minutes with high speed agitation. After the high speed agitation, the resulting curable coating composition is discharged from the mixer and applied to a substrate by roll coating. Once applied to the substrate, the curable coating composition is cured by UV radiation, thereby forming the coating layer of the floor covering.

Example 2 was prepared by first mixing together the following ingredients
i. 14.61 grams of polyester acrylate
ii. 25.71 grams of urethane acrylate
iii. 11.68 grams of tricyclodecane dimethanol diacrylate;
iv. 5.84 grams of hexanediol diacrylate
v. 4.09 grams of trimethylolpropane triacrylate;
vi. 5.26 grams of 2-phenoxythyl acrylate; and
vii. 7.01 grams of silicone acrylate.

Next 3.09 grams of amine synergist and 4.04 grams of photoinitiator were added with high speed agitation until completely dissolved in the mixture. The photoinitiator included 3.22 grams of diphenyl ketone and 0.82 grams of 1-hydroxy-cyclohexyl phenyl ketone. Next, 10.46 grams of matting agent was added. The matting agent included 7.07 grams of PTFE wax and 3.39 grams of silica. The matting agent was added slowly, the mixture is agitated for at least 10 minutes with high speed agitation. After the high speed agitation, the resulting curable coating composition is discharged from the mixer and applied to a substrate by roll coating. Once applied to the substrate, the curable coating composition is cured by UV radiation, thereby forming the coating layer of the floor covering.

Example 3 was prepared by first mixing together the following ingredients
i. 17.24 grams of polyester acrylate
ii. 17.24 grams of epoxy acrylate
iii. 6.9 grams of acrylate
iv. 13.79 grams of tricyclodecane dimethanol diacrylate;
v. 6.21 grams of cyclic trimethylolpropane formal acrylate 6.21
vi. 4.83 grams of trimethylolpropane triacrylate;
vii. 6.21 grams of 2-phenoxythyl acrylate; and
viii. 6.9 grams of silicone acrylate.

Next 2.45 grams of amine synergist and 3.194 grams of photoinitiator were added with high speed agitation until completely dissolved in the mixture. The photoinitiator included 2.55 grams of diphenyl ketone and 0.64 grams of 1-hydroxy-cyclohexyl phenyl ketone. Next, 2.65 grams of silica matting agent was added. The matting agent was added slowly, the mixture is agitated for at least 10 minutes with high speed agitation. Additional ingredients include 12.07 grams of filler, wax, and surfactant. After the high speed agitation, the resulting curable coating composition is discharged from the mixer and applied to a substrate by roll coating. Once applied to the substrate, the curable coating composition is cured by UV radiation, thereby forming the coating layer of the floor covering.

The surface energy for each of Examples 1-3 was then tested and the average contact angle was measured. The results are provided in Table 1.

**Table 1**

| | Ex.1 | Ex.2 | Ex.3 |
|---|---|---|---|
| Amount of Silicon Acrylate (SA) in Coating Layer | 1.6 wt. % | 7.1 wt.% | 6.9 wt. % |
| Amount of Fluoro-compound (FC) in Coating Layer | 2.4% | 7.07% | - |
| Total Amoutn fo SA + FC based on Total Coating Layer | 4 wt.% | 14.2 wt. % | 6.9 wt. % |
| Ratio of SA:FC | 0.66:1 | 1:1 | 1:0 |
| Average Contact Angle | 105.7° | 110° | 103° |
| Surface Energy (dy/cm) | 10.31 | - | 11.01 |

The present invention is directed to coating layers having silicon acrylate (SA) and fluoro-containing compound (FC) in a weight ratio of 1: 1 and total weight of SA + FC of about 5 wt. % based on the total weight of the coating layer. Although Example 2 provided a ratio of 1:1 for SA:FC, the total amount of SA + Fc exceeded 5 wt. %. Therefore, the resulting coating layer exhibited a contact angle too high (>110°) for suitable flooring applications - causing the floor covering to fail minimum polish-ability and frictional requirements for flooring surfaces. Furthermore, while Example 3 results in a coating layer having a contact angle of 103°, without meeting the SA:FC ratio of 1:2 to 2: 1, the amount of SA required was almost 7 wt.%. However, as demonstrated by Example 1, using a SA:FC ratio of 2: 1 to 1:2 allows for superior contact angles (100° - 110°) while also using than 5 wt. % of SA + FC in the overall coating layer.

Furthermore, to establish the lower threshold for optimal contact angles, the stain resistance of the coating layer of Example 1 was compared against that of a number of commercial flooring products. Three tests were performed with three separate contaminants: (1) red food dye; (2) asphalt sealant; (3) and mustard. Specifically, red food dye was dropped onto the surface of each floor covering of Examples 1 and 4-7 and left for an average of 3 minutes and then wiped away and observed for stain resistance. Separately, asphalt sealant was dropped onto the surface of each floor covering of Examples 1 and 4-7 and left for an average of 3 minutes and then wiped away and observed for stain resistance. Separately, mustard was dropped onto the surface of each floor covering of Examples 1 and 4-7 and left for an average of 10 minutes and then wiped away and observed for stain resistance. After each contaminants was wiped away, the surface of each example was compared for stain resistance and assigned either a pass ("P") or fail ("F") based on observed stain-resistant performance. The results are provided in Table 2

**Table 2**

| | Ex. 1 | Ex. 4¹ | Ex. 5² | Ex. 6³ | Ex. 7⁴ |
|---|---|---|---|---|---|
| Contact Angle | 105.7° | 98.5° | 87.8° | 88.6° | 97.5° |
| Surface Energy (dy/cm) | 10.3 | 14.1 | 20.9 | 20.3 | 14.7 |
| Red Food Dye | P | F | F | F | F |
| Asphalt Sealant | P | F | F | F | F |
| Mustard | P | F | F | F | F |

| | | | | | |
|---|---|---|---|---|---|
| ¹ Mannington Nature's Path 12121 ² Mannington Adura Essex Oak ³ Mannington Nature's Path 12143 ⁴ Amtico Standard Fused Birch. | | | | | |

Inadequate stain resistance resulted from the floor coverings having contact angles below 100°.

As those skilled in the art will appreciate, numerous changes and modifications may be made to the embodiments described herein, without departing from the spirit of the invention. It is intended that all such variations fall within the scope of the invention.

## Claims

1. A floor covering comprising
a substrate, and
a coating layer formed from a curable coating composition comprising:
a binder comprising a silicon acrylate in a first amount; and
a fluoropolymer in a second amount;
wherein a weight ratio of the first amount of the silicon acrylate to the second amount of fluoropolymer ranges from 1:2 to 2:1.

2. The floor covering of claim 1 wherein the first amount of the silicone acrylate ranges from about 1 wt.% to 5 wt. % based on the a total weight of the coating layer.

3. The floor covering of claim 1 wherein the second amount of the fluoropolymer ranges from about 1 wt.% to 5 wt. % based on a total weight of the coating layer.

4. The floor covering of claim 1 wherein a sum of the first amount of silicone acrylate and the second amount of fluoropolymer ranges from about 1 wt. % to 5 wt. % based on a total weight of the coating layer.

5. The floor covering of claim 3 wherein the fluoropolymer is polytetrafluoroethylene powder.

6. The floor covering of claim 1 wherein the coating layer has an average thickness ranging from 2 µm to 50 µm, preferably from 4 µm to 40 µm, and more preferably from 6 µm to 20 µm.

7. A multi-layer floor covering comprising the floor covering according to any one of claims 1 to 6 and a base coat layer, wherein the coating layer according to any one of claims 1 to 6 is a top coat layer.

8. A method of forming a floor covering comprising:
a) providing a curable binder composition comprising a silicone acrylate in a first amount;
b) adding a fluoropolymer in a second amount to the curable binder composition to form a curable coating composition;
c) applying the curable coating composition to a substrate;
d) exposing the curable coating composition to a first radiation for a first period of time; and e) exposing the curable coating composition to a second radiation for a second period of time;
wherein the first period of time and the second period of time do not overlap, and wherein a weight ratio of the first amount of the silicone acrylate to the second amount of the fluoropolymer ranges from 2:1 to 1:2.

9. The method of claim 8, wherein the first period of time is separated from the second period of time by a third period of time ranging from 1 second to 60 seconds, and/or wherein the first radiation comprises UVA radiation ranging from 0.15 to 0.2 J/cm².

10. The method of claim 8, wherein the second radiation comprises UVA radiation ranging from 0.8 to 1.2 J/cm².

11. The method of claim 8, wherein prior to step b) a dispersing agent is added to binder.

## Patentansprüche

1. Bodenbelag, aufweisend
ein Substrat, und
eine Deckschicht, die aus einer härtbaren Beschichtungszusammensetzung gebildet ist, aufweisend:
ein Bindemittel mit einem Silikonacrylat in einer ersten Menge; und
ein Fluorpolymer in einer zweiten Menge,
wobei ein Gewichtsverhältnis der ersten Menge des Silikonacrylats zur zweiten Menge des Fluorpolymers im Bereich von 1:2 bis 2:1 liegt.

2. Bodenbelag nach Anspruch 1, bei welchem die erste Menge des Silikonacrylats im Bereich von etwa 1 Gew.-% bis 5 Gew.-% bezogen auf ein Gesamtgewicht der Deckschicht liegt.

3. Bodenbelag nach Anspruch 1, bei welchem die zweite Menge des Fluorpolymers im Bereich von etwa 1 Gew.-% bis 5 Gew.-% bezogen auf ein Gesamtgewicht der Deckschicht liegt.

4. Bodenbelag nach Anspruch 1, bei welchem eine Summe der ersten Menge des Silikonacrylats und der zweiten Menge des Fluorpolymers im Bereich von etwa 1 Gew.-% bis 5 Gew.-% bezogen auf ein Gesamtgewicht der Deckschicht liegt.

5. Bodenbelag nach Anspruch 3, bei welchem das Fluorpolymer Polytetrafluorethylenpulver ist.

6. Bodenbelag nach Anspruch 1, bei welchem die Deckschicht eine durchschnittliche Dicke im Bereich von 2 µm bis 50 µm, bevorzugt von 4 µm bis 40 µm, und bevorzugter von 6 µm bis 20 µm hat.

7. Mehrschichtiger Bodenbelag, aufweisend den Bodenbelag nach einem der Ansprüche 1 bis 6 und eine Basisdeckschicht, wobei die Deckschicht gemäß einem der Ansprüche 1 bis 6 eine oberste Deckschicht ist.

8. Verfahren zum Bilden eines Bodenbelags, aufweisend:
a) Bereitstellen einer härtbaren Bindemittelzusammensetzung mit einem Silikonacrylat in einer ersten Menge;
b) Hinzufügen eines Fluorpolymers in einer zweiten Menge zur härtbaren Bindemittelzusammensetzung, um eine härtbare Beschichtungszusammensetzung zu bilden;
c) Auftragen der härtbaren Beschichtungszusammensetzung auf ein Substrat;
d) Aussetzen der härtbaren Beschichtungszusammensetzung einer ersten Bestrahlung für eine erste Zeitspanne; und
e) Aussetzen der härtbaren Beschichtungszusammensetzung einer zweiten Bestrahlung für eine zweite Zeitspanne,
wobei sich die erste Zeitspanne und die zweite Zeitspanne nicht überlappen, und wobei ein Gewichtsverhältnis der ersten Menge des Silikonacrylats zur zweiten Menge des Fluorpolymers im Bereich von 2:1 bis 1:2 liegt.

9. Verfahren nach Anspruch 8, bei welchem die erste Zeitspanne von der zweiten Zeitspanne durch eine dritte Zeitspanne im Bereich von 1 Sekunde bis 60 Sekunden getrennt ist und/oder die erste Bestrahlung eine UVA-Bestrahlung im Bereich von 0,15 bis 0,2 J/cm² aufweist.

10. Verfahren nach Anspruch 8, bei welchem die zweite Bestrahlung eine UVA-Strahlung im Bereich von 0,8 bis 1,2 J/cm² aufweist.

11. Verfahren nach Anspruch 8, bei welchem vor Schritt b) dem Bindemittel ein Dispersionsmittel zugesetzt wird.

## Revendications

1. Revêtement de sol comprenant :
un substrat, et
une couche de revêtement formée à partir d'une composition de revêtement durcissable comprenant :
un liant comprenant un acrylate de silicium en une première quantité ; et
un fluoropolymère en une deuxième quantité ;
dans lequel un rapport pondéral de la première quantité d'acrylate de silicium à la deuxième quantité de fluoropolymère est compris entre 1:2 et 2:1.

2. Revêtement de sol selon la revendication 1, dans lequel la première quantité d'acrylate de silicium est comprise entre environ 1 % en poids et 5 % en poids sur la base du poids total de la couche de revêtement.

3. Revêtement de sol selon la revendication 1, dans lequel la deuxième quantité du fluoropolymère est comprise entre environ 1 % en poids et 5 % en poids sur la base du poids total de la couche de revêtement.

4. Revêtement de sol selon la revendication 1, dans lequel la somme de la première quantité d'acrylate de silicium et de la deuxième quantité de fluoropolymère est comprise entre environ 1 % en poids et 5 % en poids % sur la base du poids total de la couche de revêtement.

5. Revêtement de sol selon la revendication 3, dans lequel le fluoropolymère est de la poudre de polytétrafluoroéthylène.

6. Revêtement de sol selon la revendication 1, dans lequel la couche de revêtement a une épaisseur moyenne comprise entre 2 µm et 50 µm, de préférence entre 4 µm et 40 µm, et de plus grande préférence entre 6 µm et 20 µm.

7. Revêtement de sol multicouche comprenant le revêtement de sol selon l'une quelconque des revendications 1 à 6 et une couche de revêtement de base, dans lequel la couche de revêtement selon l'une quelconque des revendications 1 à 6 est une couche de revêtement supérieure.

8. Procédé de formation d'un revêtement de sol consistant à :
a) fournir une composition de liant durcissable comprenant un acrylate de silicium en une première quantité ;
b) ajouter un fluoropolymère en une deuxième quantité à la composition de liant durcissable pour former une composition de revêtement durcissable ;
c) appliquer la composition de revêtement durcissable sur un substrat ;
d) exposer la composition de revêtement durcissable à un premier rayonnement pendant une première période de temps ; et
e) exposer la composition de revêtement durcissable à un deuxième rayonnement pendant une deuxième période de temps ;
dans lequel la première période de temps et la deuxième période de temps ne se chevauchent pas, et dans lequel un rapport pondéral de la première quantité d'acrylate de silicium à la deuxième quantité de fluoropolymère est compris entre 2:1 et 1:2.

9. Procédé selon la revendication 8, dans lequel la première période de temps est séparée de la deuxième période de temps par une troisième période de temps comprise entre 1 et 60 secondes, et /ou dans lequel le premier rayonnement comprend un rayonnement UVA compris entre 0,15 et 0,2 J / cm².

10. Procédé selon la revendication 8, dans lequel le deuxième rayonnement comprend un rayonnement UVA compris entre 0,8 et 1,2 J / cm².

11. Procédé selon la revendication 8, dans lequel, avant l'étape b), un agent dispersant est ajouté au liant.
